# EUROPEAN PATENT APPLICATION

(11) **EP 4 365 064 A1**
(43) Date of publication of application: **08.05.2024**
(21) Application number: 22833496.7
(22) Date of filing: 22.06.2022
(51) Int. Cl.: B62D 25/02, B62D 21/15, B62D 27/02

(54) **SIDE SILL FOR VEHICLE**

(30) Priority: 28.06.2021 KR 20210083669
(71) Applicant: POSCO Co., Ltd, Pohang-si, Gyeongsangbuk-do 37859 (KR)
(72) Inventor: LEE, Gyu-Min, Incheon 21985 (KR)
(74) Representative: Meissner Bolte Partnerschaft mbB
(86) International application number: PCT/KR2022/008864
(87) International publication number: WO 2023/277440

(57) **Abstract**

A side sill for a vehicle according to the present invention may comprise: a side sill frame provided with a cavity portion; a partition member that passes through the cavity portion and partitions the cavity portion into a first cavity and a second cavity; a first reinforcing frame which is positioned in the first cavity and contacts the side sill frame and the partition member to form a closed section in the first cavity on a thickness-direction cross-section of the side sill frame; and a second reinforcing frame which is positioned in the second cavity and contacts the side sill frame and the partition member to form a closed section in the second cavity on a thickness-direction cross-section of the side sill frame.

## Description

### Technical Field

The present disclosure relates to a side sill for a vehicle.

### Background Art

A side sill for a vehicle serves to protect passengers by absorbing collision energy in the event of a side collision.

A side sill applied to eco-friendly vehicles such as electric vehicles serves to protect not only passengers but also batteries disposed on a floor. Because the battery has a relatively large volume as compared to other components of the vehicle, a side space of a vehicle equipped with the battery is relatively narrow as compared to a vehicle equipped with an internal combustion engine.

Accordingly, the side sill applied to the eco-friendly vehicles needs to be capable of absorbing maximum collision energy in a narrow space, and needs to have a minimum weight in order to improve energy efficiency of eco-friendly vehicles.

To this end, aluminum extrusion materials have been applied to the side sills of the eco-friendly vehicles, but it is still desired to improve the ability to absorb collision energy and achieve weight reduction.

(Patent Document 1) KR 20-1998-0043143U (September 25, 1998)

### Summary of Invention

### Technical Problem

An aspect of the present disclosure is to improve collision energy absorption efficiency of a side sill and achieve lightweightedness thereof.

An aspect of the present disclosure is to increase the rigidity of a side sill and reduce manufacturing costs.

### Solution to Problem

According to an aspect of the present disclosure, a side sill for a vehicle may include: a side sill frame formed to have a cavity portion; a partition member that passes through the cavity portion and partitions the cavity portion into a first cavity and a second cavity; a first reinforcing frame which is positioned in the first cavity and contacts the side sill frame and the partition member to form a closed section in the first cavity on a thickness-direction cross-section of the side sill frame; and a second reinforcing frame which is positioned in the second cavity and contacts the side sill frame and the partition member to form a closed section in the second cavity on a thickness-direction cross-section of the side sill frame.

Additionally, at least one of the side sill frame, the partition member, the first reinforcing frame, and the second reinforcing frame may be formed of steel.

Additionally, the side sill frame may include: a first side sill frame having the first cavity therein; and a second side sill frame bonded to the first side sill frame and having the second cavity

Additionally, a shape of a thickness-direction cross-section of the first reinforcing frame may include: a plurality of first lower flange portions formed by bending both ends and bonded to an internal surface of the first side sill frame; a plurality of first extension portions connected to the plurality of first lower flange portions, respectively, and extending in a direction of the partition member; and a first upper flange portion connected to the plurality of first extension portions and bonded to the partition member.

Additionally, a shape of a thickness-direction cross-section of the second reinforcing frame may include: a plurality of second lower flange portions formed by bending both ends and bonded to the partition member; a plurality of second extension portions connected to the plurality of second lower flange portions and extending in a direction of the second side sill frame; and a second upper flange portion connected to the plurality of second extension portions and bonded to an internal surface of the second side sill frame.

Additionally, the first upper flange portion may continuously contact the partition member during a predetermined section and may be bonded to the partition member .

Additionally, the second upper flange portion may continuously contact the second side sill frame during a predetermined section and may be bonded to the second side sill frame.

Additionally, a shape of a thickness-direction cross-section of the first reinforcing frame may include: a plurality of first lower flange portions formed by bending both ends and bonded to the partition member; a plurality of first extension portions connected to the plurality of first lower flange portions, respectively, and extending in a direction of the first side sill frame; and a first upper flange portion connected to the plurality of first extension portions and bonded to an internal surface of the first side sill frame.

Additionally, a shape of a thickness-direction cross-section of the second reinforcing frame may include: a plurality of second lower flange portions formed by bending both ends and bonded to an internal surface of the second side sill frame; a plurality of second extension portions connected to the plurality of second lower flange portions and extending in a direction of the partition member; and a second upper flange portion connected to the plurality of second extension portions and bonded to the partition member.

Additionally, a length of the first extension portion and a length of the second extension portion may be different from each other.

Additionally, in the thickness-direction cross-section of the side sill frame, the first cavity and the second cavity may be asymmetrical with each other.

Additionally, a shape of a thickness-direction cross-section of the second reinforcing frame may include: a plurality of second lower flange portions formed by bending both ends and bonded to the partition member; a plurality of second extension portions connected to the plurality of second lower flange portions and extending in a direction of the second side sill frame; and a second upper flange portion connected to the plurality of second extension portions and bonded to the second side sill frame.

Additionally, a length of the first extension portion and a length of the second extension portion may be identical to each other.

Additionally, in the thickness-direction cross-section of the side sill frame, the first cavity and the second cavity may be symmetrical with each other.

Additionally, at least one of the side sill frame, the partition member, the first reinforcing frame, and the second reinforcing frame may include a curved region.

Additionally, at least one of the first reinforcing frame and the second reinforcing frame may include a concave-convex portion in a longitudinal cross-sectional shape of the side sill frame.

Additionally, the first reinforcing frame and the second reinforcing frame may be bonded to the side sill frame or partition member by at least one of welding and adhesive bonding.

### Advantageous Effects of Invention

According to an aspect of the present disclosure, collision energy absorption efficiency of a side sill may be improved, and a weight of the side sill may be reduced.

According to an aspect of the present disclosure, the rigidity of a side sill may be increased, and manufacturing costs may be reduced.

### Brief Description of Drawings

FIG. 1 is a perspective view of a side sill for a vehicle according to an example embodiment of the present disclosure.
FIG. 2 is a front cross-sectional view of FIG. 1.
FIG. 3 is an enlarged view of the first reinforcing frame of FIG. 2.
FIG. 4 is an enlarged view of the second reinforcing frame of FIG. 2.
FIG. 5 is a partially exploded view of FIG. 1.
FIG. 6 is a cross-sectional view of a conventional side sill for a vehicle.
FIG. 7 is a deformation analysis result of the side sill for a vehicle of FIG. 1.
FIG. 8 is a deformation analysis result of the side sill for a vehicle of FIG. 1.
FIG. 9 is a deformation analysis result of the side sill for a vehicle of FIG. 1.
FIG. 10 is a graph of load-displacement curves of the side sill for a vehicle of FIG. 1 and the side sill for a vehicle of FIG. 6.
FIG. 11 is a perspective view of a side sill for a vehicle according to another example embodiment of the present disclosure.
FIG. 12 is a front cross-sectional view of FIG. 11.
FIG. 13 is an enlarged view of the first reinforcing frame of FIG. 12.
FIG. 14 is an enlarged view of the second reinforcing frame of FIG. 12.
FIG. 15 is a partially exploded view of FIG. 11.
FIG. 16 is a perspective view of a side sill for a vehicle according to another example embodiment of the present disclosure.
FIG. 17 is a front cross-sectional view of FIG. 16.
FIG. 18 is an enlarged view of the second reinforcing frame of FIG. 17.
FIG. 19 is a cross-sectional view taken along line A-A' and line B-B' of FIG. 1.
FIG. 20 is a cross-sectional view taken along line C-C' and line D-D' of FIG. 11.
FIG. 21 is a cross-sectional view taken along line E-E' and line F-F' of FIG. 16.

### Best Mode for Invention

In order to assist in understanding the description of example embodiment of the present disclosure, the elements described with the same reference numerals in the accompanying drawings are the same elements, and related components among the components performing the same action in each example embodiment are indicated by numbers on the same or an extended line.

Furthermore, in order to clarify the gist of the present disclosure, the description of elements and technologies well known by the related art is omitted, and the present disclosure will be described in detail below with reference to the accompanying drawings.

However, the concept of the present disclosure is not limited to example embodiment presented below, and those skilled in the art may propose other embodiments included within the scope of the idea of the present disclosure by adding, modifying, or deleting specific components, but these additions, modifications, or deletions should be construed as being included in the scope of the present disclosure.

Hereinafter, an X-axis illustrated in the accompanying drawings is a width direction of the side sill, a Y-axis is a length direction of the side sill, and a Z-axis is a height direction of the side sill.

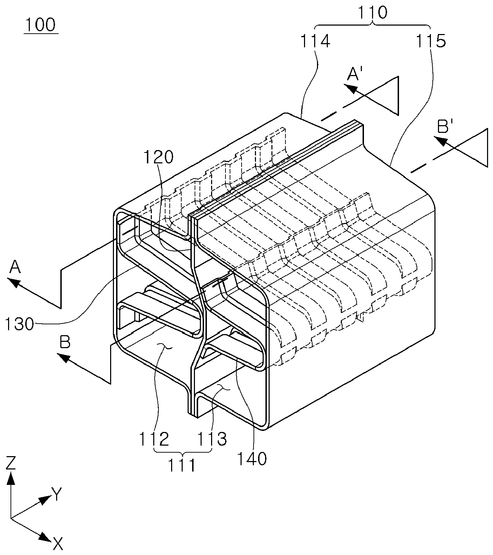

As illustrated in FIG. 1, a side sill 100 for a vehicle according to an example embodiment of the present disclosure may include a side sill frame 110 having a cavity portion 111, a partition member 120 partitioning the cavity portion 111 of the side sill frame 110 into a first cavity 112 and a second cavity 113, a first reinforcing frame 130 disposed in the first cavity 112, and a second reinforcing frame 140 disposed in the second cavity 113.

The partition member 120 may be coupled to the side sill frame 110 to be disposed in a direction, parallel to the Z-axis.

The first reinforcing frame 130 may contact the side sill frame 110 and the partition member 120 to form a closed section in the first cavity 112 in a thickness-direction cross-section of the side sill frame.

The second reinforcing frame 140 may contact the side sill frame 110 and the partition member 120 to form a closed section in the second cavity 113 in the thickness-direction cross-section of the side sill frame.

The first reinforcing frame 130 and the second reinforcing frame 140 may be coupled to the side sill frame 110 and the partition member 120 so as to be disposed in parallel with the X-axis. When the first reinforcing frame 130, the second reinforcing frame 140, and the partition member 120 are arranged and coupled as above, a closed section in a direction in parallel with the X-axis may be easily formed, and the assembly of the side sill for a vehicle may be improved, thereby improving production efficiency.

According to the first reinforcing frame 130, the second reinforcing frame 140, and the partition member 120, when the side sill receives an impact in a side surface thereof, that is, receives collision an X-axis direction, deformation may be induced to be concentrated in the X-axis direction while minimizing deformation of the side sill frame 110 in a Z-axis direction. This may improve collision energy absorption efficiency of the side sill, and minimize transmission of a collision impact to a passenger boarding region and in a downward direction of a vehicle in which a battery is accommodated.

In an example embodiment of the present disclosure, at least one of the side sill frame 110, the partition member 120, the first reinforcing frame 130, and the second reinforcing frame 140 may be formed of steel. Accordingly, they can further improve a collision energy absorption capacity that a side sill frame 110, a partition member 120, a first reinforcing frame 130, and a second reinforcing frame 140 formed of aluminum of the same weight.

In an example embodiment of the present disclosure, the first reinforcing frame 130 and the second reinforcing frame 140 may be formed of materials including ultra-high strength steel having a tensile strength of 980 MPa or higher.

In an example embodiment of the present disclosure, the first reinforcing frame 130 and the second reinforcing frame 140 may be formed of a material including 1180 TRIP steel.

In an example embodiment of the present disclosure, the side sill frame 110 may be formed of a material including 1470 MART steel.

However, the present disclosure is not necessarily limited by the present disclosure, and may be appropriately changed and applied within the scope of a steel material.

At least one of the side sill frame 110, the partition member 120, the first reinforcing frame 130, and the second reinforcing frame 140 may be molded by foam-forming or crash-forming a steel plate. This may contribute to reducing manufacturing costs through reduction of mold costs.

As described above, when the side sill for a vehicle is formed of steel, a collision energy absorption capacity thereof may be at least equal to or greater than a collision energy absorption capacity of the side sill for a vehicle formed of aluminum of the same weight. Accordingly, as compared to when the side sill is formed of aluminum, the side sill may be lightened and the collision energy absorption efficiency thereof may be improved to the same level or higher at the same time.

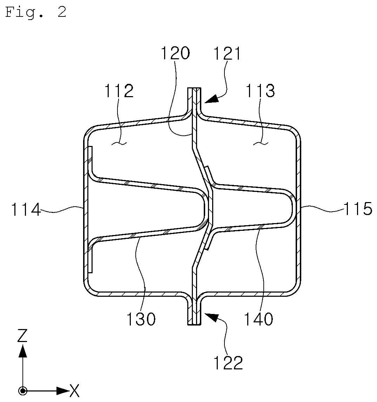

As illustrated in FIG. 2, in an example embodiment of the present disclosure, the side sill frame 110 may include a first side sill frame 114 including the first cavity 112 therein, and a second side sill frame 115 bonded to the first side sill frame 114 and including the second cavity therein.

The partition member 120 may be disposed between the first side sill frame 114 and the second side sill frame 115, one side thereof may be bonded to the first side sill frame 114 and the second side sill frame 115 to form a first bonding portion 121, and the other side thereof may be bonded to the first side sill frame 114 and the second side sill frame 115 to form a second bonding portion 122.

The partition member 120 may allow the first side sill frame 114 and the second side sill frame 115 to be stably compressed and deformed in a direction of a load when the load is applied in the X-axis direction. Accordingly, the partition member 120 may serve to improve the absorption capacity of collision energy.

One side of the first reinforcing frame 130 is bonded to the first side sill frame 114 and the other side thereof is bonded to the partition member 120, thus forming a closed section in the first cavity 112.

One side of the second reinforcing frame 140 is bonded to the partition member 120 and the other side thereof is bonded to the second side sill frame 115, thus forming a closed section in the second cavity 113.

The partition member 120 may partition the cavity portion so that the first cavity 112 and the second cavity 113 are asymmetrical with each other.

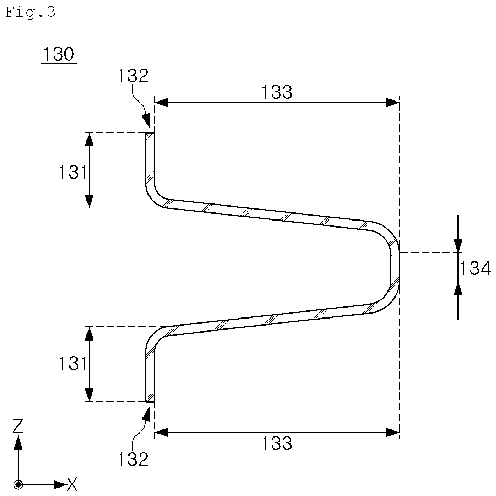

FIG. 3 illustrates a first reinforcing frame 130 according to an example embodiment of the present disclosure. The first reinforcing frame 130 may be formed by bending and molding a single steel plate. By bending and molding the single steel plate, a mechanical strength of the first reinforcing frame 130 may be further improved.

A shape of a thickness-direction cross-section of the first reinforcing frame 130 may include a plurality of first lower flange portions 131 formed by bending both ends 132 and bonded to an internal surface of the first side sill frame 114, a plurality of first extension portions 133 connected to the plurality of first lower flange portions 131, respectively, and extending in a direction of the partition member 120, and a first upper flange portion 134 connected to the plurality of first extension portions 133 and bonded to the partition member 120.

The first reinforcing frame 130 may be bent so that the first extension portion 133 and the first lower flange portion 131 may be disposed to cross each other.

The first extension portion 133 may be formed to be inclined, and may extend from the first cavity 112 (see FIG. 2) to just before the partition member 120 while not contacting the first side sill frame 114 (see FIG. 2) . Accordingly, when the load is applied in the X-axis direction, compression deformation of the first reinforcing frame 130 may be facilitated in the direction of the load.

In an example embodiment of the present disclosure, the first upper flange portion 134 may be planar. Accordingly, when an adhesive or the like is applied to the first upper flange portion 134, adhesive force of the first upper flange portion 134 may be improved, and the convenience of adhesion and assembly tasks may be improved.

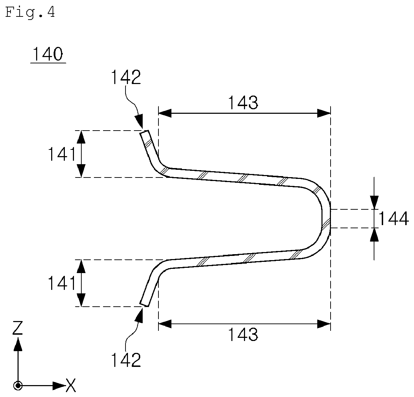

FIG. 4 illustrates a second reinforcing frame 140 according to an example embodiment of the present disclosure. The second reinforcing frame 140 may be formed by bending and molding a single steel plate. By bending and molding the single steel plate, a mechanical strength of the second reinforcing frame 140 may be further improved.

A shape of a thickness-direction cross-section of the second reinforcing frame 140 may include a plurality of second lower flange portions 141 formed by bending both ends 142 and bonded to the partition member 120, a plurality of second extension portions 143 connected to the plurality of second lower flange portions 141 and extending in a direction of the second side sill frame 115, and a second upper flange portion 144 connected to the plurality of second extension portions 143 and bonded to an internal surface of the second side sill frame 115.

The second lower flange portion 141 and the second extension portion 143 may be formed to be inclined. The second lower flange portion 141 may come into contact with and be fixed to the partition member 120 (see FIG. 2), and the second extension portion 143 may extend from the second cavity 113 (see FIG. 2) to just before the second side sill frame 115 while not contacting the second side sill frame 115 (see FIG. 2). Accordingly, when the load is applied in the X-axis direction, compression deformation of the second reinforcing frame 140 may be facilitated in the direction of the load.

In an example embodiment of the present disclosure, the second upper flange portion 144 may be planar. Accordingly, when an adhesive or the like is applied to the second upper flange portion 144, adhesive force of the second upper flange portion 144 may be improved, and the convenience of adhesion and assembly tasks may be improved.

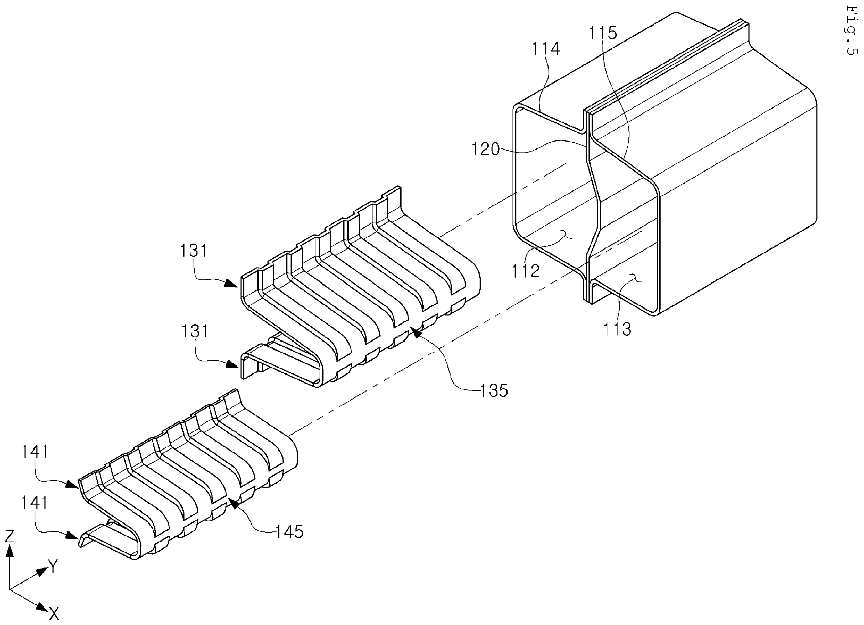

As illustrated in FIG. 5, a first bonding surface 135 may exist on the first upper flange portion 134 (see FIG. 3), and a second bonding surface 145 may exist on the second upper flange portion 144 (see FIG. 4).

The first bonding surface 135 and the second bonding surface 145 may be planar, thereby improving bonding performance.

The first upper flange portion 134 may continuously exist during a predetermined section in a direction in parallel with the Y-axis, and may continuously contact the partition member 120 during a predetermined section.

The second upper flange portion 144 may continuously exist during a predetermined section in a direction in parallel with the Y-axis, and may continuously contact the second side sill frame 115 during a predetermined section.

Accordingly, the first bonding surface 135 and the second bonding surface 145 may continuously exist in a Y-axis direction during a predetermined section, and an entire first bonding surface 135 may be bonded to the partition member 120 and an entire second bonding surface 145 may be bonded to the second side sill frame 115, thereby improving the bonding performance.

Meanwhile, at least one of the first side sill frame 114, the second side sill frame 115, the partition member 120, the first reinforcing frame 130, and the second reinforcing frame 140 may include a curved region.

According to an example embodiment of the present disclosure, the first reinforcing frame 130 and the second reinforcing frame 140 may be bent in the Y-axis direction.

According to an example embodiment of the present disclosure, the first lower flange portion 131, the second lower flange portion, the first extension portion 133 (see FIG. 3), and the second extension portion 143 (see FIG. 4) may be bent in the Y-axis direction by a certain section. Accordingly, rigidity of the first reinforcing frame 130 and the second reinforcing frame 140 may be increased.

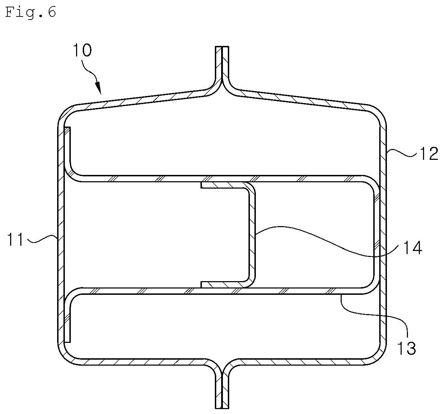

FIG. 6 illustrates a cross-section of a conventional side sill 10 for a vehicle. The side sill 10 for a vehicle may include a plurality of side sill frames 11 and 12 and reinforcing frames 13 and 14 disposed therein.

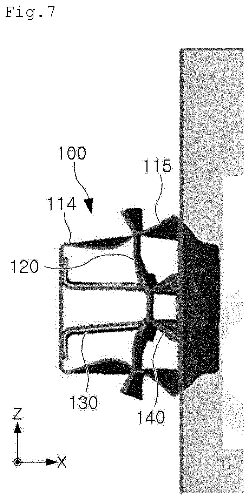

Meanwhile, FIG. 7 illustrates results of a collision test deformation analysis of the side sill 100 for a vehicle according to an example embodiment of the present disclosure, illustrated in FIG. 1, a deformation analysis result at the beginning of the collision.

At the beginning of the collision, it may be seen that the second side sill frame 115 and the second reinforcing frame 140 are compressed and deformed in the X-axis direction.

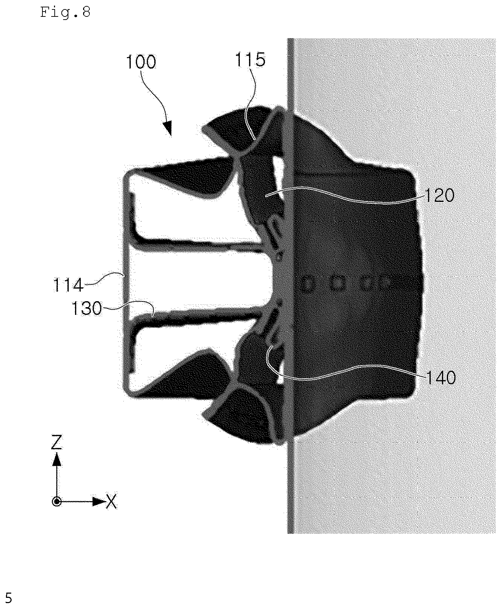

Additionally, referring to FIG. 8, in the middle of the collision, it may be seen that the first side sill frame 114, the first reinforcing frame 130, the second side sill frame 115, the second reinforcing frame 140, and the partition member 120 are compressed and deformed in the X-axis direction, and it may be seen that an amount of compressive deformation in the X-axis direction is larger than an amount of tensile deformation in the Z-axis.

Also, referring to FIG. 8, it may be seen that the first reinforcing frame 130 and the second reinforcing frame 140 according to an example embodiment of the present disclosure are uniformly compressed in the X-axis direction without a phenomenon in which deformation is biased to either side.

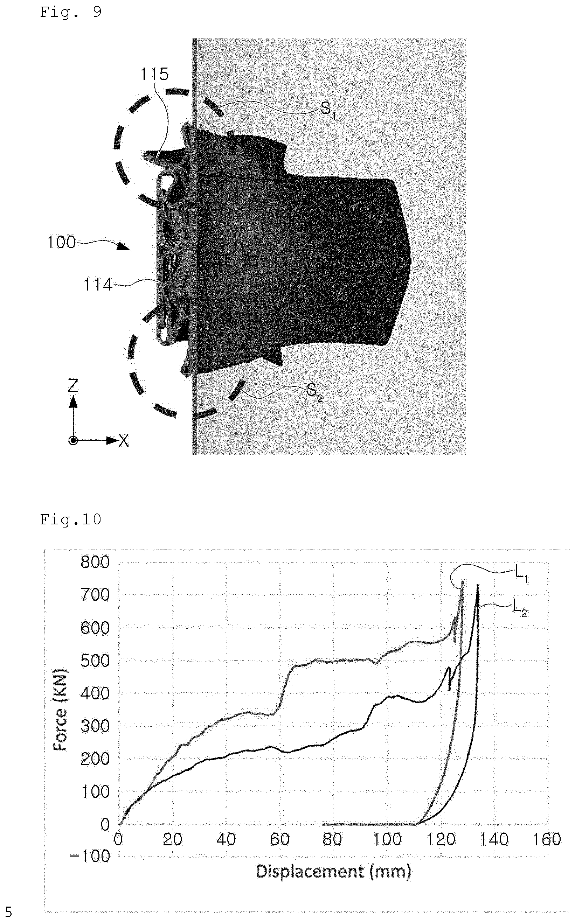

Fig. 9 illustrates deformation at the end of the collision. As illustrated in FIG. 9, a minimum distance in the Z-axis direction between a first tensile deformation portion S1 and a second tensile deformation portion S2 formed after completion of collision of the side sill for a vehicle may be formed relatively narrow without widening. This may contribute to preventing the side sill for a vehicle from invading a region in which a battery of the vehicle and passengers are present. Furthermore, it may be seen that the side sill 100 for a vehicle illustrated in FIG. 9 is easily compressed in the X-axis direction, thus further improving a load absorption capacity applied in the X-axis direction.

A graph of load-displacement curves illustrated in FIG. 10 illustrates a load-displacement value of the side sill for a vehicle 100 (see FIG. 1) illustrated in FIG. 1 as a first value L1, and a load-displacement value of the side sill for a vehicle 100 (see FIG. 6) illustrated in FIG. 6 as a second value L2.

A displacement of the side sill for a vehicle 100 (see FIG. 1) illustrated in FIG. 1 was based on the first lower flange portion 131 (see FIG. 3) of the first reinforcing frame 130 (see FIG. 3), and a displacement of the side sill for a vehicle 10 (see FIG. 6) illustrated in FIG. 6 was based on a position corresponding to the first lower flange portion 131 (see FIG. 3) of the side sill for a vehicle 100 (see FIG. 1) illustrated in FIG 1.

Referring to the first value L1 and the second value L2, it may be seen that the side sill for a vehicle (100 in FIG. 1) illustrated in FIG. 1 has a relatively small displacement at the same load as compared to the side sill for a vehicle (10 in FIG. 6) illustrated in FIG. 6.

Specifically, it may be seen that a maximum displacement of the side sill for a vehicle (100 in FIG. 1) illustrated in FIG. 1 occurs at a load higher than a maximum displacement of the side sill for a vehicle (10 in FIG. 6) illustrated in FIG. 6. Accordingly, it may be seen that the side sill for a vehicle (100 in FIG. 1) illustrated in FIG. 1 has higher collision energy absorption efficiency than the side sill for a vehicle (10 in FIG. 6) illustrated in FIG. 6.

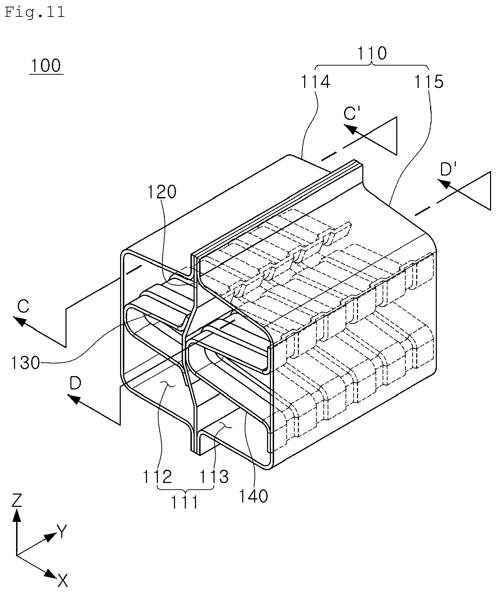

FIG. 11 illustrates a side sill 100 for a vehicle according to another example embodiment of the present disclosure.

Accordingly, the side sill for a vehicle 100 may include a side sill frame having a cavity portion, a partition member 120 partitioning the cavity portion of the side sill frame into a first cavity 112 and a second cavity, a first reinforcing frame 130 disposed in the first cavity 112, and a second reinforcing frame 140 disposed in the second cavity.

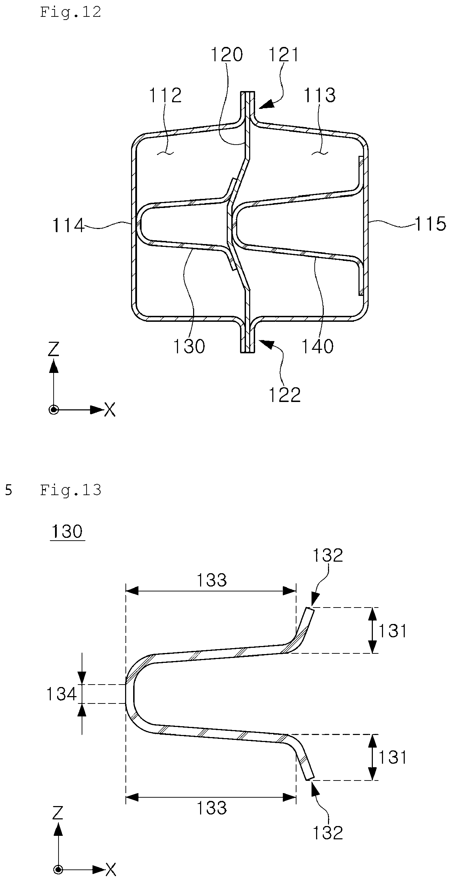

As illustrated in FIG. 12, the partition member 120 may be disposed between the first side sill frame 114 and the second side sill frame 115, and one side thereof may be bonded to the first side sill frame 114 and the second side sill frame 115 to form a first bonding portion 121, and the other side thereof may be bonded to the first side sill frame 114 and the second side sill frame 115 to form a second bonding portion 122.

One side of the first reinforcing frame 130 is bonded to the first side sill frame 114, and the other side thereof is bonded to the partition member 120, thus forming a closed section in the first cavity 112.

One side of the second reinforcing frame 140 is bonded to the partition member 120, and the other side thereof is bonded to the second side sill frame 115, thus forming a closed section in the second cavity.

The partition member 120 may partition the cavity portion so that the first cavity 112 and the second cavity are asymmetrical with each other.

As illustrated in FIG. 13, a shape of a thickness-direction cross-section of the first reinforcing frame 130 may include a plurality of first lower flange portions 131 formed by bending both ends and bonded to the partition member 120 (see FIG. 12), a plurality of first extension portions 133 connected to the plurality of first lower flange portions 131 and extending in a direction of the first side sill frame 114 (see FIG. 12), respectively, and a first upper flange portion 134 connected to the plurality of first extension portions 133 and bonded to an internal surface of the first side sill frame 114 (see FIG. 12).

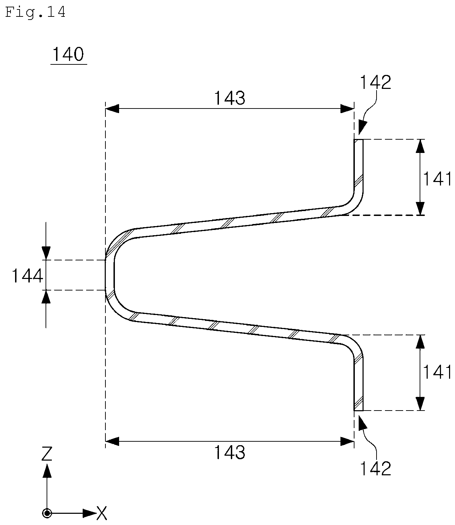

As illustrated in FIG. 14, a shape of a thickness-direction cross-section of the second reinforcing frame 140 may include a plurality of second lower flange portions 141 formed by bending both ends and bonded to the internal surface of the second side sill frame 115 (see FIG. 12), a plurality of second extension parts 143 connected to the plurality of second lower flange portions 141 and extending in a direction of the partition member 120 (see FIG. 12), and a second upper flange portion 144 connected to a plurality of second extension portions 143 and bonded to the partition member 120 (see FIG. 12).

The first reinforcing frame 130 and the second reinforcing frame 140 may be molded so that lengths of the first extension portion 133 and the second extension portion 143 are different from each other.

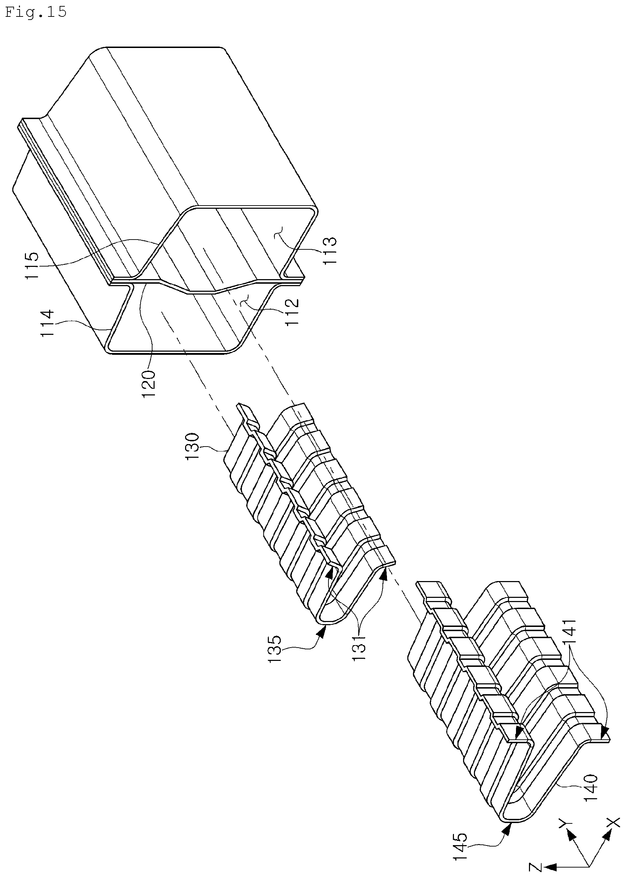

As illustrated in FIG. 15, a first bonding surface 135 may exist on the first upper flange portion 134 (see FIG. 13), and a second bonding surface 145 may exist on the second upper flange portion 144 (see FIG. 14).

The first bonding surface 135 and the second bonding surface 145 may be planar, thereby improving bonding performance.

An entire first bonding surface 135 may be bonded to an internal surface of the first side sill frame 114, and an entire second bonding surface 145 may be in contact with the partition member 120, thereby improving the bonding performance.

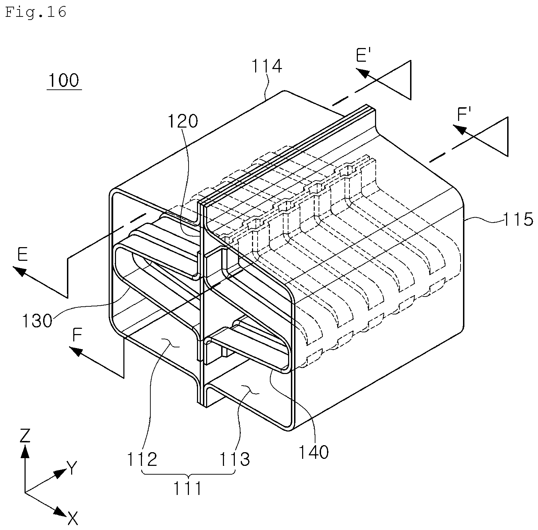

Meanwhile, FIG. 16 illustrates a side sill for a vehicle according to another example embodiment of the present disclosure. Accordingly, the side sill for a vehicle 100 may include a side sill frame having a cavity portion, a partition member 120 partitioning the cavity portion of the side sill frame into the first cavity 112 and the second cavity, a first reinforcing frame 130 disposed in the first cavity 112, and a second reinforcing frame 140 disposed in the second cavity.

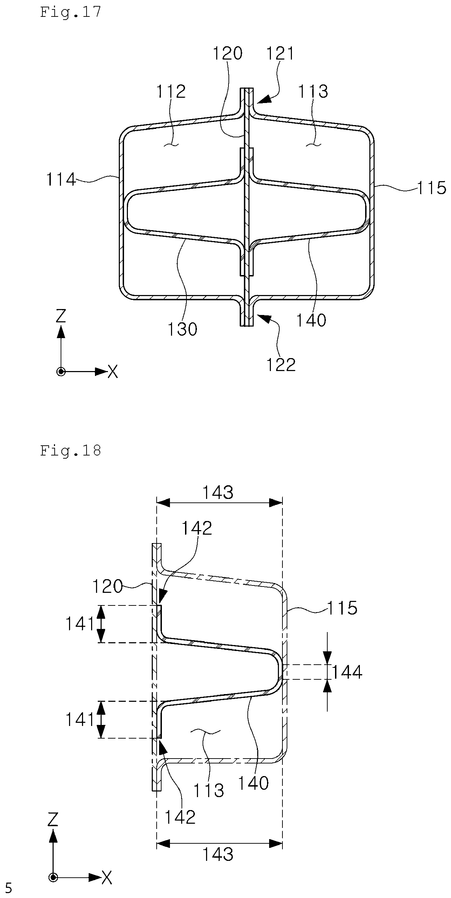

As illustrated in FIG. 17, the side sill frame may include a first side sill frame 114 including the first cavity 112 therein and a second side sill frame 115 bonded to the first side sill frame 114 and including the second cavity therein.

The partition member 120 may be disposed between the first side sill frame 114 and the second side sill frame 115, one side thereof may be bonded to the first side sill frame 114 and the second side sill frame 115 to form a first bonding portion 121, and the other side thereof may be bonded to the first side sill frame 114 and the second side sill frame 115 to form a second bonding portion 122.

One side of the first reinforcing frame 130 is bonded to the first side sill frame 114, and the other side thereof is bonded to the partition member 120, thus forming a closed section in the first cavity 112.

One side of the second reinforcing frame 140 is bonded to the partition member 120, and the other side thereof is bonded to the second side sill frame 115, thus forming a closed section in the second cavity.

As illustrated in FIG. 18, the partition member 120 may partition the cavity portion so that the first cavity 112 (see FIG. 17) and the second cavity are symmetrical with each other.

Furthermore, the first reinforcing frame 130 (see FIG. 17) and the second reinforcing frame 140 may also be provided in a shape symmetrical with each other based on the partition member 120.

Accordingly, a shape of the second reinforcing frame 140 illustrated in FIG. 18 may be equally applied to a shape of the first reinforcing frame 130 (see FIG. 17).

A shape of a thickness-direction cross-section of the second reinforcing frame 140 may include a plurality of second lower flange portions 141 formed by bending both ends and bonded to the partition member 120, a plurality of second extension portions 143 connected to the plurality of second lower flange portions 141 and extending in a direction of the second side sill frame 115, and a second upper flange portion 144 connected to the plurality of second extension portions 143 and bonded to the second side sill frame 115.

In this case, since shapes of the first reinforced frame 130 (see FIG. 17) and the second reinforced frame 140 are symmetrical with each other, a shape of a thickness-direction cross-section of the first reinforcing frame 130 (see FIG. 17) may include a plurality of first lower flange portions (not illustrated) formed by bending both ends (not illustrated) and bonded to the partition member 120, and a plurality of first extension portions (not illustrated) connected to the plurality of first lower flange portions and extending in the direction of the first side sill frame 114, and a first upper flange portion (not illustrated) connected to the plurality of first extension portions (not illustrated) and bonded to an internal surface of the first side sill frame 114.

According to another example embodiment of the present disclosure, the first reinforcing frame 130 (see FIG. 17) and the second reinforcing frame 140 may face each other with the partition member 120 interposed therebetween.

In this case, a length of the first extension portion (not illustrated) of the first reinforcing frame 130 may be identical to a length of the second extension portion 143 of the second reinforcing frame 140.

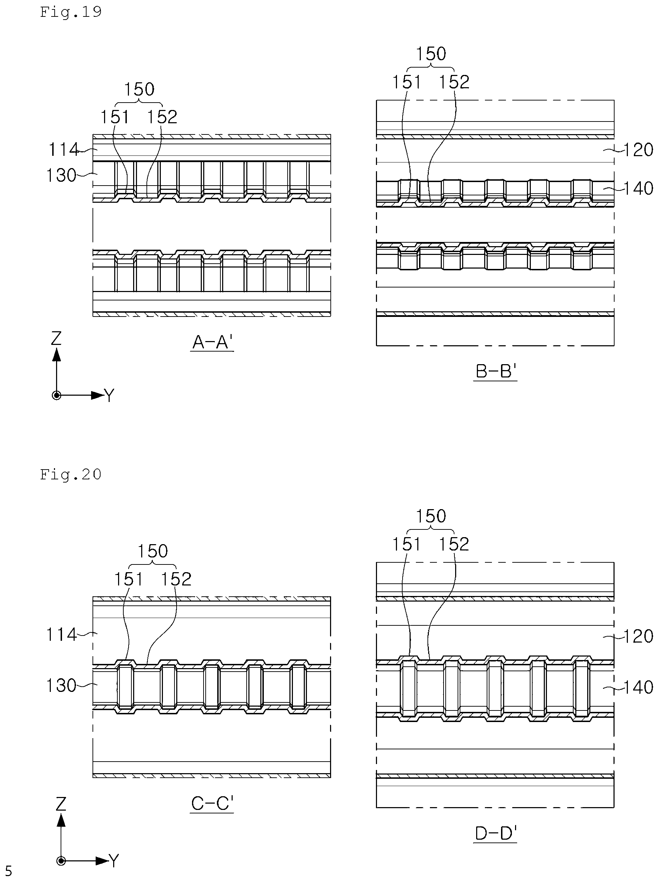

FIG. 19 illustrates a cross-section taken along line A-A' and line B-B' of FIG. 1. Referring to FIG. 19, it may be seen that the cross-sectional shapes of the first reinforcing frame 130 and the second reinforcing frame 140 include a concave-convex portion 150 in the Y-axis direction.

The concave-convex portion 150 may continuously exist during a predetermined section in the Y-axis direction, and may have a shape in which a convex portion 151 and a concave portion 152 are alternately arranged.

The convex portion 151 and the concave portion 152 may be formed in the first reinforcing frame 130 and the second reinforcing frame 140 so that the X-axis direction is a longitudinal direction. Accordingly, when the load is applied in the X-axis direction, a length direction of the convex portion 151 and the concave portion 152 may be disposed in parallel with the direction of the load, thereby making it easier for the first reinforcing frame 130 and the second reinforcing frame 140 to be compressed and deformed in the X-axis direction.

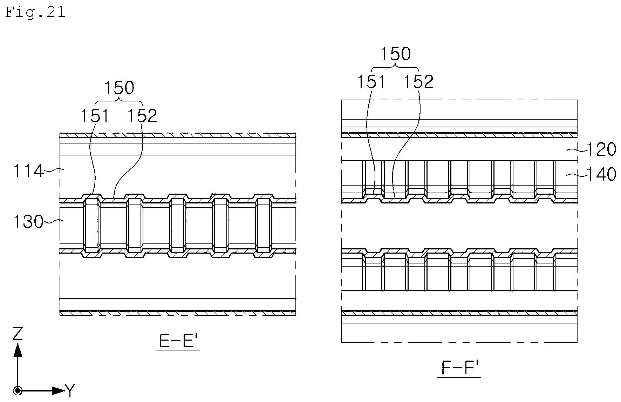

Furthermore, FIG. 20 illustrates a cross-section taken along line C-C' and line D-D' of FIG. 11, and FIG. 21 illustrates a cross-section taken along line E-E' and line F-F' of FIG. 16.

Referring to these drawings, in each example embodiment of the present disclosure, it may be seen that the cross-sectional shapes of the first reinforcing frame 130 and the second reinforcing frame 140 in the Y-axis direction include the concave-convex portion 150.

Furthermore, it may be seen that the concave-convex portion 150 may continuously exist in the Y-axis direction, and may have a form in which the convex portion 151 and the concave portion 152 are alternately arranged.

Meanwhile, in each embodiment of the present disclosure, the first reinforcing frame 130 and the second reinforcing frame 140 may be bonded to the side sill frame (e.g., 110 of FIG. 1) or the partition member (e.g., 120 of FIG. 1) by at least one of welding and adhesive bonding.

As illustrated in FIG. 1, in an example embodiment of the present disclosure, the first lower flange portion 131 (see FIG. 3) of the first reinforcing frame 130 may be spot-welded to the first side sill frame 114.

As illustrated in FIG. 2, in an example embodiment of the present disclosure, the partition member 120 may be spot-welded to the first side sill frame 114 and the second side sill frame 115 to form the first bonding portion 121.

As illustrated in FIG. 2, in an example embodiment of the present disclosure, the second lower flange portion 141 (see FIG. 4) of the second reinforcing frame 140 may be spot-welded to the partition member 120.

As illustrated in FIG. 5, in an example embodiment of the present disclosure, the first bonding surface 135 of the first reinforcing frame 130 may be bonded to the partition member 120 with an adhesive.

As illustrated in FIG. 5, in an example embodiment of the present disclosure, the second bonding surface 145 of the second reinforcing frame 140 may be bonded to the second side sill frame 115 with the adhesive.

Accordingly, coupling force between each component of the side sill for a vehicle may be maximized.

Accordingly, the convenience of tasks may be improved by improving the assembly of the side sill for a vehicle.

Accordingly, the present disclosure may contribute to reducing manufacturing costs of the side sill for a vehicle.

The aforementioned description is provided for an example embodiment of the present disclosure, and it will be apparent to those skilled in the art that the scope of the present disclosure is not limited thereto, and various modifications and variations may be made without departing from the technical concept of the present disclosure as defined in the appended claims.

**Description of Reference Characters**

| | | | |
|---|---|---|---|
| 110: | SIDE SILL FRAME | 114: | FIRST SIDE SILL FRAME |
| 115: | SECOND SIDE SILL FRAME | 120: | PARTITION MEMBER |
| 121: | FIRST BONDING PORTION | 122: | SECOND BONDING PORTION |
| 130: | FIRST REINFORCING FRAME | 131: | FIRST LOWER FLANGE PORTION |
| 133: | FIRST EXTENSION PORTION | 134: | SECOND LOWER FLANGE PORTION |
| 135: | FIRST BONDING SURFACE | 140: | SECOND REINFORCING FRAME |
| 141: | SECOND LOWER FLANGE PORTION | 143: | SECOND EXTENSION PORTION |
| 144: | SECOND UPPER FLANGE PORTION | 145: | SECOND BONDING SURFACE |
| 150: | CONCAVE-CONVEX PORTION | 151: | CONVEX PORTION |
| 152: | CONCAVE PORTION | | |

## Claims

1. A side sill for a vehicle comprising:
a side sill frame formed to have a cavity portion;
a partition member that passes through the cavity portion and partitions the cavity portion into a first cavity and a second cavity;
a first reinforcing frame which is positioned in the first cavity and contacts the side sill frame and the partition member to form a closed section in the first cavity on a thickness-direction cross-section of the side sill frame; and
a second reinforcing frame which is positioned in the second cavity and contacts the side sill frame and the partition member to form a closed section in the second cavity on a thickness-direction cross-section of the side sill frame.

2. The side sill for a vehicle of claim 1, wherein at least one of the side sill frame, the partition member, the first reinforcing frame, and the second reinforcing frame is formed of steel.

3. The side sill for a vehicle of claim 2, wherein the side sill frame comprises:
a first side sill frame having the first cavity therein; and
a second side sill frame bonded to the first side sill frame and having the second cavity therein.

4. The side sill for a vehicle of claim 3, wherein a shape of a thickness-direction cross-section of the first reinforcing frame comprises:
a plurality of first lower flange portions formed by bending both ends and bonded to an internal surface of the first side sill frame;
a plurality of first extension portions connected to the plurality of first lower flange portions, respectively, and extending in a direction of the partition member; and
a first upper flange portion connected to the plurality of first extension portions and bonded to the partition member.

5. The side sill for a vehicle of claim 4, wherein a shape of a thickness-direction cross-section of the second reinforcing frame comprises:
a plurality of second lower flange portions formed by bending both ends and bonded to the partition member;
a plurality of second extension portions connected to the plurality of second lower flange portions and extending in a direction of the second side sill frame; and
a second upper flange portion connected to the plurality of second extension portions and bonded to an internal surface of the second side sill frame.

6. The side sill for a vehicle of claim 5, wherein the first upper flange portion continuously contacts the partition member during a predetermined section and is bonded to the partition member.

7. The side sill for a vehicle of claim 5, wherein the second upper flange portion continuously contacts the second side sill frame during a predetermined section and is bonded to the second side sill frame.

8. The side sill for a vehicle of claim 3, wherein a shape of a thickness-direction cross-section of the first reinforcing frame comprises:
a plurality of first lower flange portions formed by bending both ends and bonded to the partition member;
a plurality of first extension portions connected to the plurality of first lower flange portions, respectively, and extending in a direction of the first side sill frame; and
a first upper flange portion connected to the plurality of first extension portions and bonded to an internal surface of the first side sill frame.

9. The side sill for a vehicle of claim 8, wherein a shape of a thickness-direction cross-section of the second reinforcing frame comprises:
a plurality of second lower flange portions formed by bending both ends and bonded to an internal surface of the second side sill frame;
a plurality of second extension portions connected to the plurality of second lower flange portions and extending in a direction of the partition member; and
a second upper flange portion connected to the plurality of second extension portions and bonded to the partition member.

10. The side sill for a vehicle of any one of claims 5 to 7 and 9, wherein a length of the first extension portion and a length of the second extension portion are different from each other.

11. The side sill for a vehicle of claim 10, wherein in the thickness-direction cross-section of the side sill frame, the first cavity and the second cavity are asymmetrical with each other.

12. The side sill for a vehicle of claim 8, wherein a shape of a thickness-direction cross-section of the second reinforcing frame comprises:
a plurality of second lower flange portions formed by bending both ends and bonded to the partition member;
a plurality of second extension portions connected to the plurality of second lower flange portions and extending in a direction of the second side sill frame; and
a second upper flange portion connected to the plurality of second extension portions and bonded to the second side sill frame.

13. The side sill for a vehicle of claim 12, wherein a length of the first extension portion and a length of the second extension portion are identical to each other.

14. The side sill for a vehicle of claim 13, wherein in the thickness-direction cross-section of the side sill frame, the first cavity and the second cavity are symmetrical with each other.

15. The side sill for a vehicle of any one of claims 1 to 9 and 12 to 14, wherein at least one of the side sill frame, the partition member, the first reinforcing frame, and the second reinforcing frame includes a curved region.

16. The side sill for a vehicle of claim 15, wherein at least one of the first reinforcing frame and the second reinforcing frame includes a concave-convex portion in a longitudinal cross-sectional shape of the side sill frame.

17. The side sill for a vehicle of any one of claim 1 to 9 and 12 to 14, wherein the first reinforcing frame and the second reinforcing frame are bonded to the side sill frame or the partition member by at least one of welding and adhesive bonding.
